# EUROPÄISCHE PATENTSCHRIFT

(11) **EP 1 053 047 B1**
(45) Veröffentlichungstag und Bekanntmachung des Hinweises auf die Patenterteilung: **31.07.2002**
(21) Anmeldenummer: 99910201.5
(22) Anmeldetag: 05.02.1999
(51) Int. Cl.: A62B 35/04

(54) **LÄUFER, DER AUF EINER SCHIENE GLEITET, INSBESONDERE FÜR EINE ABSTURZSICHERUNG**
RUNNER WHICH SLIDES ON A RAIL, ESPECIALLY FOR A FALL PROTECTION DEVICE
CURSEUR COULISSANT SUR UN RAIL, NOTAMMENT POUR UN DISPOSITIF DE SECURITE ANTICHUTE

(30) Priorität: 06.02.1998 DE 29802037 U
(43) Veröffentlichungstag der Anmeldung: 22.11.2000
(73) Patentinhaber: Christian Dalloz Holding Deutschland GmbH & Co. KG, 95028 Hof (DE)
(72) Erfinder: SÖLL, Peter, D-95028 Hof (DE)
(74) Vertreter: Gritschneder, Martin, Dipl.-Phys.
(86) Internationale Anmeldenummer: EP9900791
(87) Internationale Veröffentlichungsnummer: WO9939772

(56) Entgegenhaltungen:
- WO-A-95/26784
- FR-A- 2 437 846
- FR-A- 2 592 643

## Beschreibung

Die Erfindung betrifft einen Läufer, der zum Gleiten auf einer mit Führungsflanschen versehenen Schiene vorgesehen ist und zwei Halbschalen zum Umgreifen der Führungsflansche aufweist.

Solche Läufer sind allgemein bekannt, siehe z.B. FR-A-2 437 846 oder FR-A-2 592 643. Sie werden insbesondere bei Absturzsicherungen als Anschlagpunkt eingesetzt.

Ein solcher Läufer kann normalerweise nur am Ende der Schiene aufgesetzt werden. Aus DE-B-27 36 037 ist ein Läufer bekannt, der in der Öffnung einer C-Profil-Schiene geführt wird. Der Läufer weist dazu seitliche Vorsprünge auf, die die Öffnungsränder des C-Profils umgreifen. Um den Läufer an einer beliebigen Stelle längs der C-Profil-Schiene einsetzen zu können, sind die auf einer Seite liegenden, inneren Vorsprünge verschwenkbar ausgebildet.

Der Erfindung liegt die Aufgabe zugrunde einen Läufer mit zwei Halbschalen, die die Führungsflansche einer Schiene von außen umfassen, so auszubilden, daß er an einer beliebigen Stelle längs der Schiene aufgesetzt werden kann.

Erfindungsgemäß wird diese Aufgabe dadurch gelöst, daß die Halbschalen axial verschiebbar auf einer Achse gelagert sind, wobei an jedem Ende der Achse eine Einrichtung zur axialen Festlegung der Halbschalen vorgesehen ist und zumindest die eine Festlegungseinrichtung einen Kugelsperrbolzen aufweist, durch den die betreffende erste Halbschale in einer geschlossenen Stellung des Läufers festlegbar ist und der nach seiner Auslösung eine axiale Verschiebung dieser Halbschale zum Öffnen des Läufers zuläßt.

An den Halbschalen sind Lagerbüchsen angesetzt oder angeformt, mittels denen die Halbschalen auf der Achse gelagert sind.

Vorzugsweise besteht die Einrichtung zum Festlegen der ersten Halbschale in einer Mutter, die teilweise auf das erste Ende der Achse aufschraubbar ist, wobei der Kugelsperrbolzen in den verbleibenden Gewindeabschnitt eingeschraubt ist und in eine Axialbohrung im ersten Ende der Achse eintaucht.

Vorzugsweise rastet der Kugelsperrbolzen in einer inneren Position ein, in der der Läufer geschlossen ist, und in einer äußeren Position, in der die Mutter soweit abgeschraubt ist, daß der Läufer zum Aufsetzen oder Abnehmen von der Schiene geöffnet werden kann.

Der Läufer kann insbesondere von der in DE-U-297 19 485 (=WO-A-9 922 816, veröffentlicht am 14.05. 1999) beschriebenen Bauart mit einer Exzenterachse sein, wobei durch eine 180°-Drehung der Exzenterachse die Arretierfunktion des Läufers ein- und ausschaltbar ist. Auf dem Exzenterabschnitt in der Mitte der Achse sitzt dabei ein Arretierhebel. Bei eingeschalteter Arretierfunktion ist der Exzenterabschnitt zur Schiene hin geschwenkt, so daß der Arretierhebel nur eine Bewegung des Läufers in einer Richtung längs der Schiene zuläßt und in der entgegengesetzten Richtung sperrt. Bei ausgeschalteter Arretierfunktion ist der Exzenterabschnitt von der Schiene weg geschwenkt, so daß der Arretierhebel nicht in Berührung mit der Schiene kommt und daher der Läufer in beiden Richtungen längs der Schiene bewegt werden kann.

Die Festlegungseinrichtung am zweiten Achsenende ist für das Verschwenken der Exzenterachse als eine Hülse ausgebildet, die drehfest mit der Exzenterachse verbunden ist, axial jedoch etwas verschiebbar ist und in zwei um 180° gegeneinander versetzten Stellungen an der Lagerbüchse der zweiten Halbschale einkuppelbar ist. Mittels eines Kugelsperrbolzens ist die Hülse in der eingekuppelten Stellung gesichert. Nach Betätigen des Kugelsperrbolzens kann die Hülse etwas verschoben und ausgekuppelt werden, so daß sie nunmehr gedreht werden kann. Bei der Drehung nimmt sie die Exzenterachse mit. In einer um 180° verdrehten Stellung kann sie wieder mit der Lagerhülse einkuppeln, wobei die Arretierfunktion des Läufers dann umgeschaltet ist.

Vorzugsweise rastet die Achse in jeder dieser um 180° versetzten Drehlagen in der ersten Halbschale ein. Dazu ist ein gefedertes Druckstück in einer Querbohrung der Achse gelagert und greift es in axiale Längsaussparungen ein, die auf der Innenseite der Lagerbüchse diametral gegenüberliegend vorgesehen sind. Dadurch wird die freie Drehbarkeit der ersten Halbschale auf der Achse verhindert.

Die Betätigungs- oder Auslöseknöpfe der Kugelsperrbolzen für die Mutter und die Hülse können mit einem farbigen, z.B. grünen, Ring versehen sein, der erst beim Herausspringen des Knopfes sichtbar wird und damit die ordnungsgemäße Verriegelung anzeigt.

Ein Ausführungsbeispiel der Erfindung wird nachfolgend anhand der Zeichnung erläutert. Es zeigen:
- Fig. 1: den Läufer in einer Ansicht mit Blickrichtung parallel zur Schiene;
- Fig. 2: den Läufer in einer Ansicht mit Blickrichtung in seiner Achse;
- Fig. 3: den Läufer in einer Ansicht mit Blickrichtung senkrecht zur Schiene und senkrecht zu seiner Achse;
- Fig. 4: die Innenseite einer der beiden Halbschalen;
- Fig. 5: das erste Ende der Achse im Schnitt;
- Fig. 6: das zweite Ende der Achse im Schnitt und
- Fig. 7: eine Ausführungsform des Läufers, bei der an der Mutter, die auf das erste Ende der Achse aufgeschraubt ist, eine Verlängerung befestigt ist.

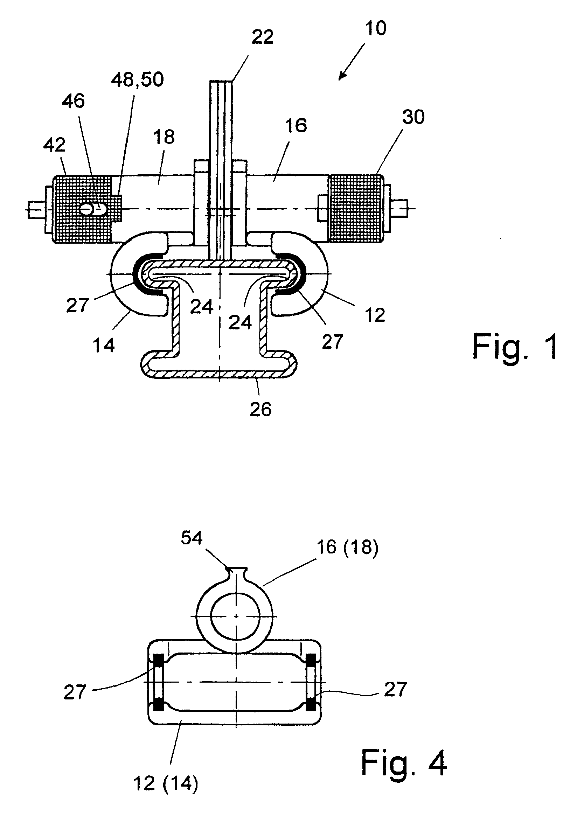

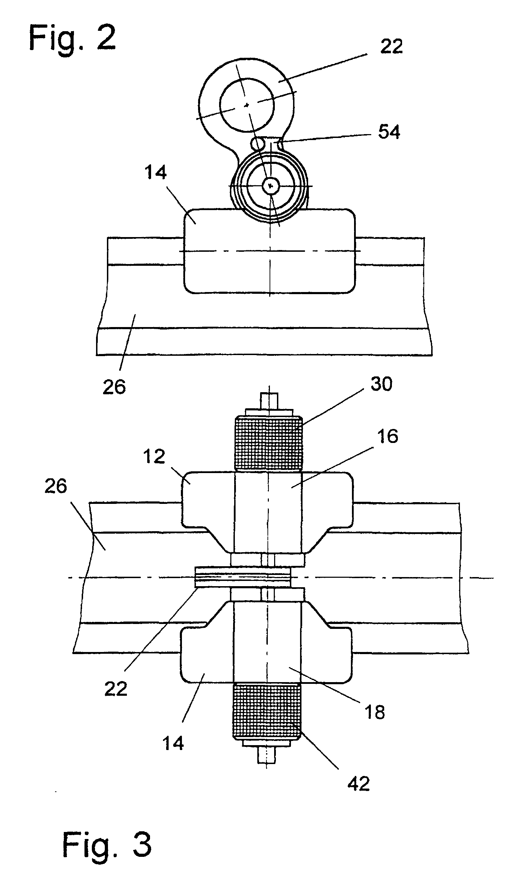

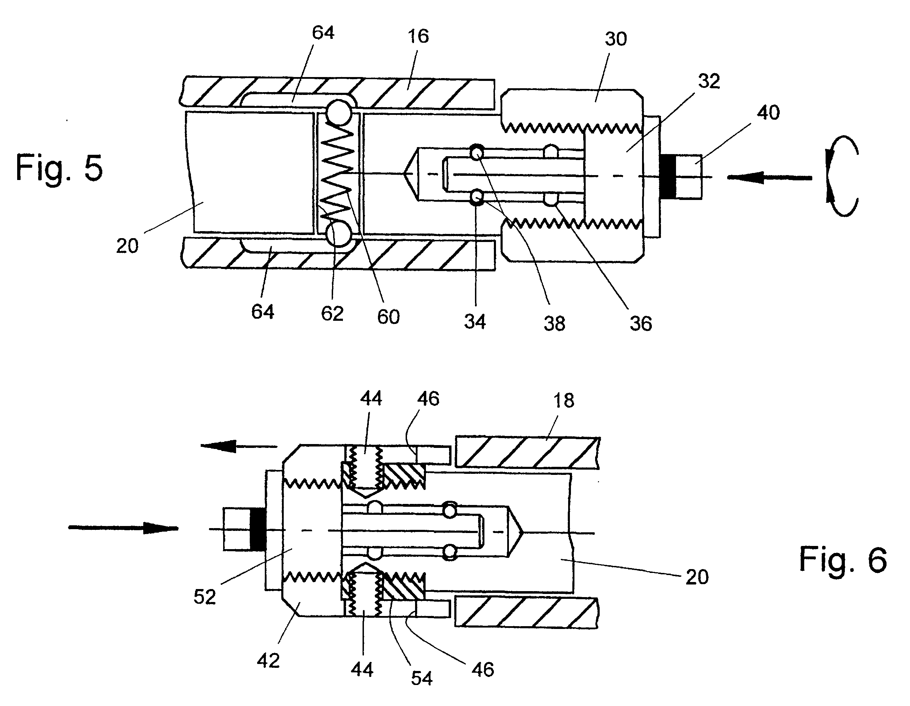

Der Läufer 10 weist eine erste Halbschale 12 und eine zweite Halbschale 14 auf, die mittels einer angesetzten ersten bzw. zweiten Lagerbüchse 16, 18 auf einer Exzenterachse 20, die in den Fig. 1 bis 3 nicht sichtbar ist, gelagert sind. Die Halbschalen 12, 14 umgreifen die Führungsflansche 24 einer Schiene 26. Zur Reibungsminderung sind in Innennuten bei den äußeren Enden der Halbschalen 12, 14 PTFE-Einsätze 27, eingefügt, die bei Verschleiß leicht ersetzbar sind (Fig. 1 und 4).

In der Mitte der Exzenterachse 20 befindet sich ein Exzenterabschnitt, auf dem ein Arretierhebel 22 gelagert ist. Insoweit besteht Übereinstimmung mit dem in den Fig. 16 bis 19 der früheren Anmeldung DE-U-297 19 485 dargestellten Läufer.

Die erste Lagerbüchse 16 mit der daran angesetzten ersten Halbschale 12 ist durch eine gerändelte Hutmutter 30 am ersten Ende der Exzenterachse 20 festgelegt. Durch teilweises Abschrauben der Hutmutter 30 kann der Abstand zwischen der ersten Halbschale 12 und der zweiten Halbschale 14 soweit vergrößert werden, daß der Läufer 10 von der Schiene 26 genommen oder auf sie aufgesetzt werden kann.

In einer zentralen Bohrung der Hutmutter 30 ist ein Kugelsperrbolzen 32 eingeschraubt, der in eine axiale Bohrung am ersten Ende der Exzenterachse 20 eintaucht. In der Bohrung befinden sich im Abstand Innenringnuten 34, 36, in die die Kugeln 38 des Kugelsperrbolzens 32 einrasten, wodurch die Hutmutter 30 in einer inneren, aufgeschraubten Position bzw. in einer äußeren, teilweise abgeschraubten Position fixierbar ist. Durch Betätigen des Knopfes 40 des Kugelsperrbolzens 32 kann die Fixierung zum Drehen der Hutmutter 30 jeweils gelöst werden.

Am zweiten Ende der Exzenterachse 20 sitzt eine gerändelte Hülse 42, die die zweite Lagerbüchse 18 mit der daran angesetzten zweiten Halbschale 14 auf der Exzenterachse 20 festlegt. Madenschrauben 44 sind am zweiten Ende der Exzenterachse 20 radial in die Exzenterachse 20 eingedreht und stehen entsprechend der Wandstärke der Hülse 42 ab. Aus produktionstechnischen Gründen ist zweckmäßig am zweiten Ende der Exzenterachse 20 das gleiche Gewinde wie am ersten Ende vorgesehen, wobei es am zweiten Ende jedoch durch eine Gewindehülse 54 abgedeckt ist. Die Madenschrauben 44 gehen durch die Gewindehülse 54 hindurch. Die beiden von der Exzenterachse 20 oder der Gewindehülse 54 radial abstehenden Enden der Madenschrauben 44 erstrecken sich in Langlöcher 46 der Hülse 42, wodurch die Hülse 42 drehfest mit der Exzenterachse 20 verbunden ist und in einem begrenzten Ausmaß axial auf der Exzenterachse 20 verschiebbar ist. Die Hülse 42 ist in zwei um 180° versetzten Positionen mit der zweiten Lagerbüchse 18 kuppelbar, wozu die Hülse 42 und die zweite Lagerbüchse 18 ineinanderpassende rechtwinklige Vorsprünge und Aussparungen 48, 50 aufweisen. Die Höhe der Vorsprünge und Aussparungen 48, 50 ist mit der Länge der Langlöcher 46 abgestimmt, so daß die Hülse 42 in ihrer inneren Endposition drehfest mit der zweiten Lagerbüchse 18 gekuppelt ist, während sie in ihrer äußeren Position frei drehbar gegenüber der zweiten Lagerbüchse 18 ist. In ihrer inneren Endposition ist die Hülse 42 durch einen Kugelsperrbolzen 52 (Fig. 6) gegen axiale Verschiebung gesichert. Erst nach Eindrücken des Knopfes des Kugelsperrbolzens 52 kann die Hülse 42 von ihrer inneren Position in ihre äußere Position verschoben werden, in der sie zusammen mit der drehfest mit ihr verbundenen Exzenterachse 20 um 180° gedreht werden kann. Danach wird sie wieder mit der äußeren Lagerbüchse 18 gekuppelt.

In beiden um 180° gegeneinander versetzten Positionen rastet die Exzenterachse 20 in der ersten Halbschale 12 ein. In der Exzenterachse 20 befindet sich dazu ein gefedertes Druckstück 60 in einer Querbohrung 62. Die seitlichen Enden des Druckstücks 60 liegen in axialen Aussparungen 64 in der Innenfläche der ersten Lagerbüchse 16. Die Exzenterachse 20 kann dadurch erst nach Überwindung eines gewissen Widerstandes gedreht werden bzw. die erste Halbschale 12 ist am freien Verdrehen um die Exzenterachse 20 gehindert. Durch die Länge der axialen Aussparungen 64 wird gleichzeitig die axiale Verschiebbarkeit der ersten Halbschale 12 auf der Exzenterachse 20 begrenzt.

Durch die 180°-Drehung der Exzenterachse 20 kann die Arretierfunktion des Läufers 10 ein- und ausgeschaltet werden, wie es im einzelnen in der älteren Anmeldung DE-U-297 19 485 beschrieben ist. Bei eingeschalteter Arretierfunktion ist der Schwenkwinkel des Arretierhebels 28 durch einen Anschlag 54 an den inneren Enden der Lagerbüchsen 16, 18 begrenzt. Dadurch wird die Abbremskraft des Läufers 10 an der Schiene 26 begrenzt.

Die Außenseite der Hutmutter 30 und der Hülse 42 können mit einem farbigen, griffigen Kunststoff beschichtet sein, auf dem die einzelnen Bedienungsvorgänge abgebildet sind.

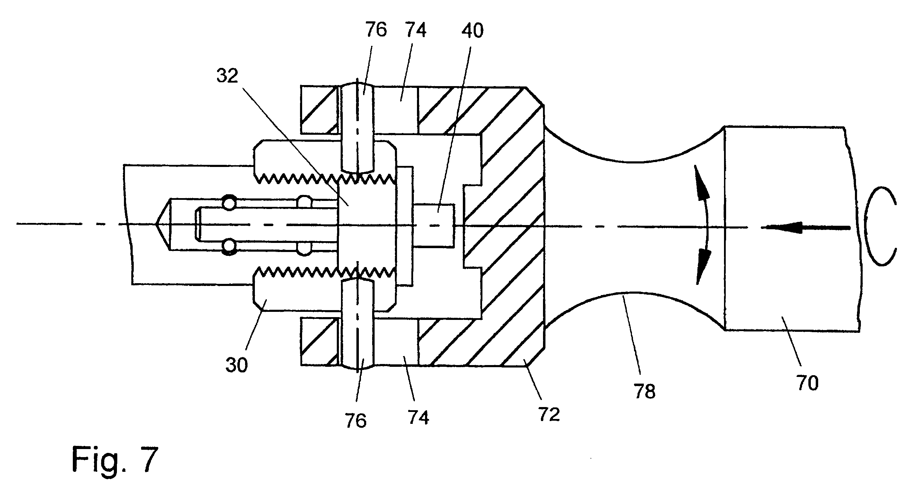

Fig. 7 zeigt eine Ausführungsform des Läufers 10, die beispielsweise in Fällen zum Einsatz kommt, in denen die Schiene 26 in einer solchen Höhe über der Standfläche des Benutzers angeordnet ist, daß sie mit der Hand nicht mehr erreichbar ist. Bei dieser Ausführungsform ist an der Hutmutter 30 ein Verlängerungsstab 70 befestigt. Der Verlängerungsstab 70 hat am oberen Ende einen Kopf 72, der die Hutmutter 30 umschließt. In dem Kopf 72 sind axiale Langlöcher 74 vorgesehen, in die Querstifte 76 eingreifen, die radial an der Hutmutter 30 angesetzt sind. Der Verlängerungsstab 70 ist dadurch drehfest, jedoch axial etwas verschiebbar mit der Hutmutter 30 gekuppelt. Durch die axiale Verschiebbarkeit kann mittels des Verlängerungsstabes 70 der Knopf 40 des Kugelsperrbolzens 32 betätigt werden, so daß mittels des Verlängerungsstabes 70 der Läufer 10 auf die Schiene 26 aufgesetzt und dann durch Betätigen des Knopfes 40 und Zudrehen der Hutmutter 30 geschlossen werden kann, so daß der Läufer 10 an der Schiene 26 gesichert ist. Der Verlängerungsstab 70 besteht aus zugfestem Kunststoff und weist unmittelbar hinter dem Kopf 72 eine Einschnürung 78 auf, so daß der Kopf 72 gegenüber dem Schaft des Verlängerungsstabes 70 verschwenkbar ist.

Die Hutmutter 30 dient bei dieser Ausführungsform zugleich als Anschlagpunkt, indem an dem Verlängerungsstab 70 der Sicherungsgurt befestigbar ist. Mittels des Verlängerungsstabes 70 kann der Läufer 10 beispielsweise in einer Höhe von 3 Metern über der Standfläche an der Schiene 26 befestigt werden.

## Patentansprüche

1. Läufer (10), der zum Gleiten auf einer mit Führungsflanschen (24) versehenen Schiene (26) vorgesehen ist und der eine erste und eine zweite Halbschale (12, 14) zum Umfassen der Führungsflansche (24) aufweist, wobei
- die erste und die zweite Halbschale (12, 14) auf einer Achse (20) gelagert sind und axial festlegbar sind,
- die erste Halbschale (12) durch eine auf das erste Ende der Achse (20) aufgeschraubte Mutter (30) axial festlegbar ist und
- die Mutter (30) durch einen Kugelsperrbolzen (32) in ihrer aufgeschraubten Position sicherbar ist.

2. Läufer nach Anspruch 1, **dadurch gekennzeichnet, daß** der Kugelsperrbolzen (32) in einer inneren und äußeren Stellung einrastet, wobei die erste Halbschale (12) in der inneren Position axial festgelegt ist, während sie in der äußeren Position soweit axial verschoben werden kann, daß der Läufer von der Schiene (26) genommen werden kann.

3. Läufer nach Anspruch 1 oder 2, **dadurch gekennzeichnet, daß** der Kugelsperrbolzen (32) durch Drücken eines Knopfes (40) lösbar ist, wobei der Knopf (40) eine farbige Markierung (41) aufweist, die nur im verriegelten Zustand des Kugelsperrbolzens (32) sichtbar ist.

4. Läufer nach Anspruch 1 bis 3, **dadurch gekennzeichnet, daß** die Achse (20) einen Exzenterabschnitt aufweist, auf dem ein Arretierhebel (22) gelagert ist, daß die Achse (20) in zwei Positionen drehbar ist, wobei in der einen Position der Exzenterabschnitt zur Schiene (26) hin verschwenkt ist und der Arretierhebel (22) nur ein Gleiten des Läufers (10) in einer Richtung längs der Schiene (26) zuläßt, und daß die zweite Halbschale (14) in beiden Positionen mit einer drehfest mit der Achse (20) verbundenen Hülse (42) kuppelbar ist.

5. Läufer nach Anspruch 4, **dadurch gekennzeichnet, daß** die erste und die zweite Halbschale (12, 14) durch angesetzte Lagerbüchsen (16, 18) auf der Achse (20) gelagert sind, und daß die Kuppelbarkeit der zweiten Halbschale (14) und der Hülse (42) dadurch erreicht wird, daß die zweite Halbschale (14) um eine bestimmte Strecke längs der Achse (20) verschiebbar ist und daß die Hülse (42) und die zweite Lagerbüchse (18) formschlüssig ineinandergreifende Vorsprünge und Aussparungen (48, 50) aufweisen, deren Höhe mit der axialen Verschiebbarkeit der zweiten Lagerbüchse (18) abgestimmt ist.

6. Läufer nach Anspruch 5, **dadurch gekennzeichnet, daß** die zweite Lagerbüchse (18) durch einen Kugelsperrbolzen (52) in ihrer eingekuppelten Stellung mit der Lagerbüchse (18) sicherbar ist.

7. Läufer nach einem der Ansprüche 4 bis 6, **dadurch gekennzeichnet, daß** die erste Halbschale (12) in beiden Positionen lösbar an der Achse (20) einrastet, so daß sie nur nach Überwindung eines Widerstandes auf der Achse (20) verdrehbar ist, in axialer Richtung jedoch zwischen der geöffneten und der geschlossenen Position des Läufers (10) verschiebbar ist.

8. Läufer nach einem der Ansprüche 1 bis 7, **dadurch gekennzeichnet, daß** an der Mutter (30) ein Verlängerungsstab (70) befestigt ist, der mit einer Mechanik zur Betätigung des Kugelsperrbolzens (32) ausgestattet ist.

9. Läufer nach Anspruch 8, **dadurch gekennzeichnet, daß** an der Mutter (30) oder dem Verlängerungsstab (70) ein Sicherungsgurt befestigbar ist.

10. Läufer nach einem der Ansprüche 1 bis 9, **dadurch gekennzeichnet, daß** die Mutter (30) und die Hülse (42) mit Kunststoff griffig beschichtet sind und auf ihnen die Bedienvorgänge abgebildet sind.

## Claims

1. Runner (10) which is provided for sliding on a rail (26) provided with guide flanges (24) and which has a first and a second half-shell (12, 14) adapted to grasp around the guide flanges (24), wherein
- the first and the second half-shells (12, 14) are mounted on an axis (20) and adapted to be axially fastened,
- the first half-shell (12) can be axially fastened by a nut (30) screwed onto the first end of the axis (20) and
- the nut (30) can be secured in its screwed-on position by a ball locking pin (32).

2. Runner according to claim 1, **characterized in that** the ball locking pin (32) locks into an inner and outer position, the first half-shell (12) being axially fastened in the inner position, whilst it can be axially displaced in the outer position so far that the runner can be removed from the rail (26).

3. Runner according to claim 1 or 2, **characterized in that** the ball locking pin (32) can be released by pressing a button (40), the button (40) having a coloured marking which can be seen only in the locked state of the ball locking pin (32).

4. Runner according to claims 1 to 3, **characterized in that** the axis (20) has an eccentric section on which an arrester lever (22) is mounted, **in that** the axis (20) can be rotated in two positions, whereby in one position the eccentric section is swivelled towards the rail (26) and the arrester lever (22) allows only a sliding of the runner (10) in a direction along the rail (26) and the second half-shell (14) can be coupled in both positions with a sleeve (42) connected in rotation-resistant manner to the axis (20).

5. Runner according to claim 4, **characterized in that** the first and the second half-shells (12, 14) are mounted on the axis (20) by attached bearing bushings (16, 18) and **in that** the second half-shell (14) and the sleeve (42) are able to be coupled because the second half-shell (14) can be displaced for a specific distance along the axis (20) and the sleeve (42) and the second bearing bushing (18) have projections and recesses (48, 50) which engage in each other in form-locking manner, whose height is matched to the axial displaceability of the second bearing bushing (18).

6. Runner according to claim 5, **characterized in that** the second bearing bushing (18) can be secured by a ball locking pin (52) in its coupled position with the bearing bushing (18).

7. Runner according to one of claims 4 to 6, **characterized in that** the first half-shell (12) locks detachably onto the axis (20) in both positions so that it can be turned on the axis (20) only after overcoming a resistance, but can be displaced in axial direction between the opened and the closed position of the runner (10).

8. Runner according to one of claims 1 to 7, **characterized in that** an extension (70) is fastened to the nut (30), and is equipped with a mechanism for actuating the ball locking pin (32).

9. Runner according to claim 8, **characterized in that** a safety belt can be fastened to the nut (30) or the extension (70).

10. Runner according to one of claims 1 to 9, **characterized in that** the nut (30) and the sleeve (42) are coated with easy-grip plastic and the operating procedures are illustrated on them.

## Revendications

1. Curseur (10), qui est prévu pour glisser sur un rail (26), pourvu d'ailes de guidage (24), et qui comprend une première et une seconde demi-coquilles (12, 14) destinées à enserrer les ailes de guidage (24), dans lequel
- la première et la seconde demi-coquilles (12, 14) sont montées, et peuvent être fixées axialement, sur un axe (20),
- la première demi-coquille (12) peut être fixée axialement au moyen d'un écrou (30) vissé sur la première extrémité de l'axe (20) et
- l'écrou (30) peut être bloqué dans sa position vissée au moyen d'un boulon de blocage à billes (32).

2. Curseur suivant la revendication 1, **caractérisé en ce que** le boulon de blocage à billes (32) s'enclenche dans une position intérieures et une position extérieure, la première demi-coquille (12) est fixée axialement dans la position intérieure, tandis que, dans la position extérieure, elle peut être déplacée axialement à un point tel que le curseur peut être retiré du rail (26).

3. Curseur suivant la revendication 1 ou 2, **caractérisé en ce que** le boulon de blocage à billes (32) est séparable par enfoncement d'un bouton (40), le bouton (40) comportant un marquage coloré (41) qui n'est visible que dans l'état verrouillé du boulon de blocage à billes (32).

4. Curseur suivant la revendication 1 à la revendication 3, **caractérisé en ce que** l'axe (20) comporte un segment excentré sur lequel un levier d'arrêt (22) est monté, **en ce que** l'axe (20) peut être amené en rotation dans deux positions, dans l'une desquelles il est possible de faire basculer le segment excentré vers le rail (26) et le levier d'arrêt (22) n'autorise qu'un glissement du curseur (10) dans une direction le long du rail (26), et **en ce que** la seconde demi-coquille (14) peut être accouplée, dans les deux positions, avec un manchon (42) calé en rotation sur l'axe (20).

5. Curseur suivant la revendication 4, **caractérisé en ce que** la première et la seconde demi-coquilles (12, 14) sont montées sur l'axe (20) au moyen de douilles de palier (16, 18), et **en ce que** la capacité d'accouplement de la seconde demi-coquille (14) et du manchon (42) est obtenue par le fait que la seconde demi-coquille (14) peut être déplacée d'une course déterminée le long de l'axe (20) et **en ce que** le manchon (42) et la seconde douille de palier (18) comportent des parties en saillie et des parties en retrait (48, 50) qui s'engagent les unes dans les autres par complémentarité de formes et dont la hauteur est adaptée à la capacité de déplacement axial de la seconde douille de palier (18).

6. Curseur suivant la revendication 5, **caractérisé en ce que** la seconde douille de palier (18) peut être bloquée au moyen d'un boulon de blocage à billes (52) dans sa position accouplée avec la douille de palier (18).

7. Curseur suivant l'une des revendications 4 à 6, **caractérisé en ce que** la première demi-coquille (12)s'enclenche, dans les deux positions, d'une manière séparable sur l'axe (20), de sorte qu'il n'est possible de la faire tourner sur l'axe (20) qu'après avoir vaincu une résistance, mais qu'elle peut être déplacée suivant la direction axiale entre la position ouverte et la position fermée du curseur (10).

8. Curseur suivant l'une des revendications 1 à 7, **caractérisé en ce qu'**une barre de prolongement (70), qui est pourvue d'un mécanisme servant à actionner le boulon de blocage à billes (32), est fixée sur l'écrou (30).

9. Curseur suivant la revendication 8, **caractérisé en ce qu'**une sangle de sécurité peut être fixée sur l'écrou (30) ou la barre de prolongement (70).

10. Curseur suivant l'une des revendications 1 à 9, **caractérisé en ce que** l'écrou (30) et le manchon (42) sont revêtus d'une matière plastique antidérapante et les opérations de service sont appliquées sur eux.
